# EUROPÄISCHE PATENTANMELDUNG

(11) **EP 0 936 192 A1**
(43) Veröffentlichungstag der Anmeldung: **18.08.1999**
(21) Anmeldenummer: 99101663.5
(22) Anmeldetag: 05.02.1999
(51) Int. Cl.: C03B 5/187, B01F 15/00

(54) **Vorrichtung zur Durchmischung von schmelzflüssigem Glas**

(30) Priorität: 17.02.1998 DE 19806543
(71) Anmelder: Lindner W. Maschinen GmbH, 94481 Grafenau-Reismühle (DE)
(72) Erfinder: Lindner, Walter, 94518 Spiegelau (DE)
(74) Vertreter: Finsterwald, Manfred

(57) **Zusammenfassung**

Es wird eine Vorrichtung zur Durchmischung von schmelzflüssigem Glas beschrieben, welche zumindest ein rotierend antreibbares Rührorgan (6) mit wenigstens zwei vom Schaft (7) radial beabstandeten und in Umfangsrichtung gegeneinander versetzten Mischgliedern (9) aufweist, wobei die Mischglieder (9) länglich ausgebildet, mit ihrer Längsachse (10) parallel oder schiefwinkelig zur Schaftachse (8) gerichtet und in ihrer Außenkontur strömungsoptimiert gerundet sind.

## Beschreibung

Die Erfindung betrifft eine Vorrichtung zur Durchmischung eines in einer Rinne zu einer Feederstation geführten Stroms von schmelzflüssigem Glas.

Beim Schmelzen von Glas treten in der Schmelze naturgemäß Inhomogenitäten auf, die bei stärkerer Ausbildung sichtbar sind und als Schlieren bezeichnet werden. Diese Inhomogenitäten treten um so stärker in Erscheinung, je weniger gut das Gemenge gemischt wurde, bevor es in den Ofen gelangt, je geringer die maximale Glastemperatur war und je mehr Glasbestandteile die Möglichkeit hatten, aus der Glasbadoberfläche in die Atmosphäre auszudiffundieren.

Da in einem Glasprodukt sichtbare Schlieren gleichbedeutend mit einer drastischen Qualitätsminderung sind, wird mit zunehmender Intensität versucht, solche Schlierenbildungen zu beseitigen. Als Möglichkeiten zur Schlierenbeseitigung steht praktisch nur die Verbesserung der thermischen oder mechanischen Durchmischung der Schmelze zur Verfügung, wobei die thermische Durchmischung aufgrund von Strömungsvorgängen und auch aufgrund von Diffusion nur bei sehr hohen Temperaturen möglich ist und stark abnimmt, wenn die Temperatur in Richtung des Entnahmepunktes des Glases aus dem Ofen absinkt. Es bleibt folglich dort nur die Möglichkeit einer mechanischen Durchmischung, und mittels die-ser mechanischen Durchmischung wird demgemäß auch primär versucht, die Schlierenbildung zu verringern.

Besonders problematisch ist es, die gewünschte Durchmischung des schmelzflüssigen Glases dann zu gewährleisten, wenn dieses schmelzflüssige Glas in sogenannten gedeckten Feeder-Rinnen vom Schmelzteil des Ofens zu den verschiedenen Entnahmepunkten geleitet werden muß. Derartige Feeder-Rinnen sind abgedeckt, um das Ausdampfen bzw. Ausdiffundieren verschiedener Bestandteile des Glases in die Atmosphäre zu verhindern.

Es ist bereits bekannt, rotierend angetriebene Rührer zu verwenden, die mit ihren seitlich vorstehende Paddel oder Ansätze tragenden Enden in den Glasfluß in der jeweiligen Feeder-Rinne eintauchen und bei Rotation einen Rühreffekt bewirken.

Diese bekannten Rührer ermöglichen es jedoch nicht, die störende Schlierenbildung zufriedenstellend zu beseitigen, und zwar deshalb, weil sich bei Drehung der Rührer hinter den Paddeln oder Ansätzen schon bei relativ geringen Drehgeschwindigkeiten eine druckreduzierte Zone aufbaut, die im Glas zur Entstehung von Bläschen führt. Diese Bläschenbildung wird auch als mechanisches Reboiling bezeichnet und entspricht hinsichtlich des vorliegenden Effekts den in der allgemeinen Strömungstechnik als Kavitation bezeichneten Effekten. In der Praxis versucht man, diesem mechanischen Reboiling dadurch entgegenzuwirken, daß die Umdrehungsgeschwindigkeit der Rührer verringert wird, aber dies hat wiederum zur Folge, daß die angestrebte Durchmischung des schmelzflüssigen Glases zu wünschen übrig läßt. Mit bekannten Rührern muß die Umdrehungszahl zum Zwecke einer ausreichenden Verringerung der Bläschenbildung bis auf etwa sechs Umdrehungen pro Minute verringert werden, was deutlich macht, daß damit kein besonders wirksamer Durchmischungseffekt erzielt werden kann.

Aufgabe der Erfindung ist es, eine Durchmischungsvorrichtung der eingangs angegebenen Art so auszugestalten, daß ohne störendes mechanisches Reboiling zum einen die Durchmischungswirkung wesentlich verbessert und zum anderen die Temperaturverteilung des schmelzflüssigen Glases über den Rinnenquerschnitt vergleichmäßigt wird, so daß hinsichtlich der Glasqualität eine wesentliche Verbesserung erzielt wird.

Gelöst wird diese Aufgabe im wesentlichen durch zumindest ein rotierend antreibbares Rührorgan mit einem im wesentlichen zylindrischen, sich durch eine Rinnenabdeckung erstreckenden Schaft, der an seinem im Rinnenraum gelegenen Endbereich mit wenigstens zwei vom Schaft radial beabstandeten und in Umfangsrichtung gegeneinander versetzten Mischgliedern versehen ist, die länglich ausgebildet, mit ihrer Längsachse parallel oder schiefwinkelig zur Schaftachse gerichtet und in ihrer Außenkontur strömungsoptimiert gerundet sind.

Diese Ausgestaltung des Rührorgans ermöglicht es in überraschender Weise, bei im Vergleich zu herkömmlichen Rührern wesentlich gesteigerter und insbesondere zwei- bis dreifach höherer Geschwindigkeit eine wirksame Durchmischung ohne Bläschenbildung im Glas, d.h. ohne mechanisches Reboiling zu erreichen. Wesentlich ist dabei die Formgebung und Außenkontur der Mischglieder, die bei ihrer Bewegung durch die Glasschmelze stets vollflächig mit der Schmelze in Berührung sind, d.h. es treten keine Abrißeffekte der Strömung relativ zu den Oberflächen der Mischglieder auf, was auch bedeutet, daß eine sehr wirksame Durchmischung des Glases gewährleistet wird, da nur dicht an den Außenflächen des Rührers bzw. der Mischglieder die angestrebte Durchmischung erfolgt, denn nur in diesen Bereichen treten die die Durchmischung bewirkenden Scherkräfte im Glas auf.

Bevorzugt trägt jeder Schaft über strömungsoptimierte Radialträger jeweils zumindest zwei einander diametral gegenüberliegende Mischglieder, wobei die Außenkontur der Mischglieder sowie der zugeordneten Radialträger derart gerundet ist, daß ihre Bewegung durch die Glasschmelze kavitationsfrei erfolgt. Die Radialträger tragen damit zusätzlich und aufgrund der gleichen, vorstehend geschilderten Effekte zur Glasdurchmischung bei.

Nach einer besonders vorteilhaften Ausgestaltung der Erfindung sind im Rinneninnenraum zumindest zwei benachbart angeordnete Rührorgane mit sich überschneidendem Flugkreisdurchmesser vorgesehen, und diese Rührorgane sind synchron phasenversetzt angetrieben.

Neben dem angestrebten Durchmischungseffekt wird auf diese Weise eine Vergleichmäßigung der Temperatur der Glasschmelze über den Rinnenquerschnitt erzielt. Das schmelzflüssige Glas in der Rinne besitzt im mittleren oberen Bereich die höchste Temperatur, und aufgrund des Zusammenwirkens der gegenläufig angetriebenen Rührorgane ergibt sich gerade im Mittelbereich, in dem sich die Flug- oder Außenumlaufkreise der Mischglieder überschneiden, ein besonders ausgeprägter Mitnahme- oder Fördereffekt, der dazu führt, daß Glasschmelze aus dem Mittelbereich in größerem Maße abgeführt und über den Rinnenquerschnitt verteilt wird, so daß im Mittelbereich kein übermäßig heißer Bereich mehr entstehen kann und die erwünschte Temperaturvergleichmäßigung erzielt wird. Gefördert werden kann dieser Effekt noch durch gezielte Schrägstellung der Mischglieder, so daß sich gerichtete Förderkomponenten für die Glasschmelze ergeben.

Eine weitere vorteilhafte Ausgestaltung der Erfindung zeichnet sich dadurch aus, daß jeder Schaft eines Rührorgans mit zumindest einem Kragen versehen ist, der unter Ausbildung einer Partikelsperre auf der Hochtemperaturseite einer Schaftdurchführung und dieser Schaftdurchführung unmittelbar benachbart angeordnet ist. Auf diese Weise wird verhindert, daß störende Partikel in die Glasschmelze gelangen können, welche von abplatzenden Schichten herrühren können, die sich außerhalb des Hochtemperaturbereichs auf Schäften oder Wänden von Durchführungen aufgrund von Sublimierungsvorgängen ausdampfender Substanzen bilden können.

Weitere besonders vorteilhafte Ausgestaltungen der Erfindung sind in den Unteransprüchen angeführt.

Ein Ausführungsbeispiel der Erfindung wird nachfolgend unter Bezugnahme auf die Zeichnung näher erläutert; in der Zeichnung zeigt:
- Fig. 1: eine schematische Schnittdarstellung einer Feeder-Rinne mit einem gemäß der Erfindung ausgebildeten Paar von Rührorganen, und
- Fig. 2: Teil- und Schnittansichten eines mit Mischgliedern versehenen Rührorgans nach Fig. 1.

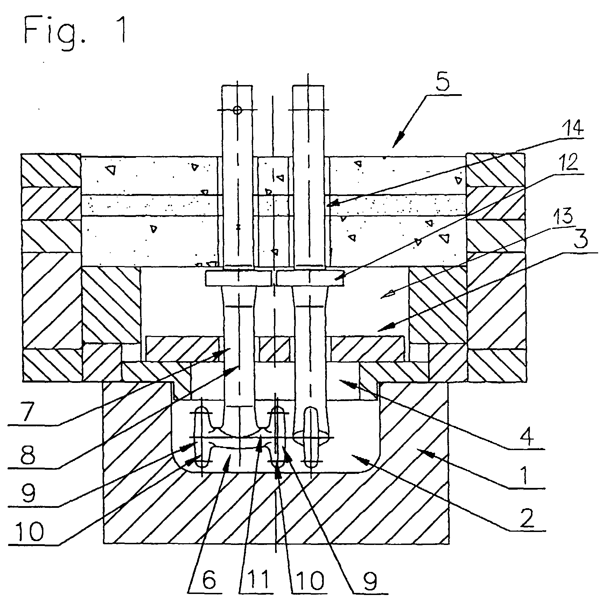

Die Fig. 1 zeigt in schematischer Weise und ohne ggf. vorhandene Heizeinrichtungen eine Feeder-Rinne 1, die einen im Querschnitt etwa U-förmigen Rinnenraum 2 aufweist, der nach oben hin mit einer Rinnenabdeckung 3 versehen ist. In dieser Rinnenabdeckung 3 ist zumindest eine Durchtrittsöffnung 4 für Rührorgane 6 vorgesehen, deren Schäfte 7 sich durch entsprechende Öffnungen nach außen und auch durch eine deckseitig vorgesehene thermische Isolierung 5 erstrecken.

Die Rührorgane 6 sind bevorzugt kurz vor dem jeweiligen Feeder angeordnet, so daß die mittels der Rührorgane 6 bewirkte Durchmischung des schmelzflüssigen Glases möglichst nahe der Abgabestelle erfolgt.

Die beiden im dargestellten Ausführungsbeispiel nebeneinander angeordneten Rührorgane 6 sind über ihre Schäfte 7 gegensinnig angetrieben, und zwar mit einer für diesen Einsatzzweck vergleichsweise hohen Drehzahl. Es können beispielsweise 15 bis 20 Umdrehungen pro Minute gewählt werden, wobei sich durch das Zusammenwirken dieser Ruhrorgane 6 mit dem langsam durch diesen Rührbereich strömenden schmelzflüssigen Glas zum einen eine stark ausgeprägte Durchmischung des Glases ergibt und zum anderen eine thermische Homogenisierung des Glasflusses erreicht wird.

Jedes Rührorgan 6 ist gemäß dargestelltem Ausführungsbeispiel mit zwei einander diametral gegenüberliegenden Mischgliedern 9 ausgestattet, die jeweils über einen Radialträger 11 mit dem Schaft 7 verbunden sind.

Der gegenseitige Abstand der beiden Rührorgane 8 ist so gewählt, daß sich die von den Mischgliedern 9 durchlaufenen Außenumfangskreise im Mittelbereich überschneiden, d.h. daß die Rührorgane zwar synchron, jedoch phasenversetzt angetrieben sein müssen, um sicherzustellen, daß die Mischglieder 9 den Überschneidungsbereich ihrer Bewegungsbahnen nacheinander durchlaufen.

Von wesentlicher Bedeutung für die Erfindung ist, daß die Mischglieder 9 und auch die Radialträger 11 in ihren Außenkonturen strömungsoptimiert gerundet sind und auch eine auf ihre Bewegungsrichtung bezogene strömungsdynamische Außenkontur besitzen können, denn eine derartige Außenkontur ist bei den gewählten Drehgeschwindigkeiten maßgeblich dafür, daß ein mechanisches Reboiling vermieden wird, das die Glasqualität entscheidend beeinträchtigen und die Brauchbarkeit einer Durchmischungsvorrichtung in Frage stellen kann.

Die Mischglieder 9 erstrecken sich bis nahe an den Boden des Rinnenraums 2 und enden unterhalb der Durchtrittsöffnung 4, in die das schmelzflüssige Glas bis zu einem vorgebbaren Level hochsteigen kann. Die länglich ausgebildeten, bolzenförmigen, jedoch strömungsoptimiert gestalteten Mischglieder 9 können mit ihren Achsen 10 parallel zur jeweiligen Achse 8 des zugehörigen Schafts 7 verlaufen, aber es ist in manchen Fällen auch vorteilhaft, diese Mischglieder 9 relativ zur Schaftachse 8 schiefwinkelig anzuordnen, um auf diese Weise den Mischvorgang und/oder die thermische Homogenisierung durch Ausübung von gezielt gerichteten Kräften auf den Glasfluß zu verbessern bzw. zu optimieren.

Es wurde bereits darauf hingewiesen, daß neben dem angestrebten Durchmischungseffekt, der durch die im Glas auftretenden Scherkräfte bewirkt wird, welche in den Bereichen des Glases wirksam werden, die sich dicht an den Außenflächen des jeweiligen Rührorgans befinden, auch noch eine thermische Homogenisierung erzielt wird, die insbesondere den Betrieb und die Einstellung nachfolgender Maschinen vereinfacht.

In dieser Hinsicht wirkt sich eine Anordnung von Rührorganen entsprechend Fig. 1 besonders vorteilhaft aus, da im mittig gelegenen Überschneidungsbereich der Rührorgane und darüber die Temperatur des schmelzflüssigen Glases am höchsten ist und aufgrund der erhöhten Mitnahmewirkung im Überdeckungsbereich der Laufbahnen der Mischglieder 9 beider Rührorgane 6 die thermische Homogenisierung besonders gefördert wird.

Es ist bekannt, daß im Zusammenhang mit geschmolzenem Glas stets Ausdampfvorgänge stattfinden, und diese Ausdampfeffekte haben die nachteilige Folge, daß diese Dämpfe außerhalb des Hochtemperaturbereichs an sich auf niedrigerer Temperatur befindenden Flächen sublimieren und Beläge bilden. Bei diesen Belägen kommt es immer wieder zu Abplatzvorgängen, und die abgeplatzten Partikel können in die Schmelze gelangen, in der sie nicht mehr lösbar oder verrührbar sind und somit Fremdkörper darstellen, die bei der Herstellung von Glasprodukten gefürchtet sind, da sie praktisch zu Ausschußprodukten führen können.

Um zu verhindern, daß derartige Partikel in die Glasschmelze gelangen können, ist der Hochtemperaturbereich bezüglich derjenigen Bereiche, in denen sich diese Beläge bilden können, mechanisch abgedichtet, und zwar durch an den Schäften 7 ausgebildete ringförmige Krägen 12, die unmittelbar benachbart einer jeweiligen Schaftdurchführung 14 angeordnet sind.

Belagbildende Sublimationsvorgänge treten in dem sich auf hoher Temperatur befindenden Zwischenraum 13 nicht auf, aber derartige Beläge können sich sowohl an den Innenwänden der Schaftdurchführungen 14 als auch an den Schaftoberflächen ausbilden. Treten dann Abplatzeffekte auf, so werden die abgeplatzten Partikel durch den jeweiligen Kragen 12 an einem Eintreten in den Zwischenraum 13 gehindert, so daß sie auch nicht in die Glasschmelze gelangen können. Sollten Partikel diese geschilderte erste mechanische Abdichtung überwinden können, dann würden sie immer noch nicht in die Glasschmelze gelangen, sondern im Zwischenraum 13 liegen bleiben. Ggf. könnte auch noch jeweils ein weiterer Kragen benachbart der Abdeckplatte vorgesehen werden, die die Durchtrittsöffnung 4 zum Zwischenraum 13 hin begrenzt.

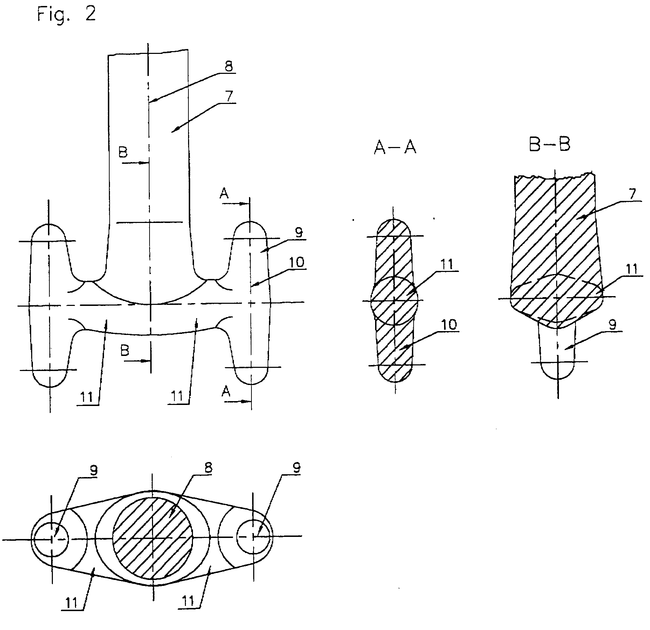

Die Fig. 2 zeigt in vergrößerter Darstellung eine vorteilhafte und beispielsweise Ausgestaltung eines Rührorgans 6, und zwar in einer Seitenansicht, einer Draufsicht und Schnittansichten A-A und B-B.

Dabei ist zu sehen, daß der Schaft 7 strömungsgünstig gerundet in die ebenfalls strömungsoptimiert ausgebildeten Radialträger 11 übergeht und die Mischglieder 9 strömungsoptimiert gerundet sind, wobei auch wiederum die Übergänge zwischen den Radialträgern 11 und diesen Mischgliedem 9 gerundet ausgebildet sind, so daß im Zusammenwirken zwischen der strömenden Glasschmelze und den rotierenden Mischgliedern druckreduzierte Zonen vermieden werden und sichergestellt wird, daß die Glas-schmelze jeweils vollflächig an den Mischgliedern 9 bzw. Radialträgern 11 anliegt und jeglicher Effekt eines Strömungsabrisses im Gegensatz zu herkömmlichen Rührgeräten mit wesentlich niedrigerer Drehgeschwindigkeit vermieden wird.

Im dargestellten Ausführungsbeispiel sind die Rührorgane derart symmetrisch ausgestaltet, daß sie in beiden möglichen Drehrichtungen angetrieben werden können, aber es ist auch möglich, richtungsgebundene Rührorgane zu verwenden, die in ihren Außenkonturen strömungsdynamischen Formgebungen entsprechen.

Die Rührorgane 6 können aus keramischem Material bestehen, wobei diese Rührer entsprechend dem Herstellungszustand oder auch mit einer Platinbeschichtung versehen eingesetzt werden können. Es ist jedoch auch möglich, Rührer dieser Art aus Platinblech geschweißt oder entsprechend einer anderen Fertigungsweise herzustellen.

### Bezugszeichenliste

- 1: Rinne
- 2: Rinnenraum
- 3: Rinnenabdeckung
- 4: Durchtrittsöffnung
- 5: Thermische Isolierung
- 6: Rührorgan
- 7: Schaft
- 8: Schaftachse
- 9: Mischglied
- 10: Längsachse
- 11: Radialträger
- 12: Kragen
- 13: Zwischenraum
- 14: Schaftdurchführung

## Patentansprüche

1. Vorrichtung zur Durchmischung eines in einer Rinne zu einer Feederstation geführten Stromes von schmelzflüssigem Glas,
**gekennzeichnet** durch
zumindest ein rotierend antreibbares Rührorgan (6) mit einem im wesentlichen zylindrischen, sich durch eine Rinnenabdeckung (3) erstreckenden Schaft (7), der an seinem im Rinnenraum (2) gelegenen Endbereich mit wenigstens zwei vom Schaft (7) radial beabstandeten und in Umfangsrichtung gegeneinander versetzten Mischgliedern (9) versehen ist, die länglich ausgebildet, mit ihrer Längsachse (10) parallel oder schiefwinkelig zur Schaftachse (8) gerichtet und in ihrer Außenkontur strömungsoptimiert gerundet sind.

2. Vorrichtung nach Anspruch 1,
dadurch **gekennzeichnet,**
daß jeder Schaft (7) über strömungsoptimierte Radialträger (11) jeweils zumindest zwei einander diametral gegenüberliegende Mischglieder (9) trägt.

3. Vorrichtung nach Ansprüchen 1 oder 2,
dadurch **gekennzeichnet,**
daß die Außenkontur der Mischglieder (9) sowie der zugeordneten Radialträger (11) derart gerundet ist, daß ihre Bewegung durch die Glasschmelze kavitationsfrei erfolgt.

4. Vorrichtung nach einem der vorhergehenden Ansprüche,
dadurch **gekennzeichnet,**
daß die axiale Länge der gerundeten, stabförmigen Mischglieder (9) größer ist als der Durchmesser des Schafts (7).

5. Vorrichtung nach Anspruch 4,
dadurch **gekennzeichnet,**
daß der gegenseitige Abstand diametral angeordneter Mischglieder (9) zumindest der doppelten Größe des Durchmessers des Schafts (7) entspricht.

6. Vorrichtung nach einem der vorhergehenden Ansprüche,
dadurch **gekennzeichnet,**
daß die Querschnittsfläche der gerundeten Mischglieder ausgehend von ihren Enden zur Mitte hin zunimmt.

7. Vorrichtung nach einem der vorhergehenden Ansprüche,
dadurch **gekennzeichnet,**
daß die Radialträger (11) sich in Radialrichtung verjüngen, wobei der Schaft (7) gerundet in die Radialträger (11) übergeht und die Breite der Radialträger (11) im Schaftanschlußbereich gleich oder größer als der Schaftdurchmesser ist.

8. Vorrichtung nach einem der vorhergehenden Ansprüche,
dadurch **gekennzeichnet,**
daß die Querschnittsfläche der Rührorgane (6) kleiner ist als die Querschnittsfläche der Radialträger (11).

9. Vorrichtung nach einem der vorhergehenden Ansprüche,
dadurch **gekennzeichnet,**
daß die Mischglieder (9) sich unter Ausbildung einer H-Struktur beidseitig über die Radialträger (11) hinaus erstrecken.

10. Vorrichtung nach einem oder mehreren der vorhergehenden Ansprüche,
dadurch **gekennzeichnet,**
daß im Rinneninnenraum (2) zumindest zwei benachbart angeordnete Rührorgane (6) mit sich überschneidendem Flugkreisdurchmesser vorgesehen und die Rührorgane (6) synchron phasenversetzt angetrieben sind.

11. Vorrichtung nach Anspruch 10,
dadurch **gekennzeichnet,**
daß der Überdeckungsbereich der Flugkreise benachbarter Rührorgane in der Rinnenmitte gelegen ist.

12. Vorrichtung nach einem der vorhergehenden Ansprüche,
dadurch **gekennzeichnet,**
daß die Rührorgane (6) aus keramischem, insbesondere mit einer Platinbeschichtung versehenem keramischen Material bestehen.

13. Vorrichtung nach einem der vorhergehenden Ansprüche,
dadurch **gekennzeichnet,**
daß die Rührorgane (6) aus Platinblech bestehen.

14. Vorrichtung nach einem oder mehreren der vorhergehenden Ansprüche,
dadurch **gekennzeichnet,**
daß jeder Schaft (7) eines Rührorgans (6) mit zumindest einem Kragen (12) versehen ist, der unter Ausbildung einer Partikelsperre auf der Hochtemperaturseite einer Schaftdurchführung (14) dieser Schaftdurchführung unmittelbar benachbart angeordnet ist.

15. Vorrichtung nach Anspruch 14,
dadurch **gekennzeichnet,**
daß der Kragen (12) ringscheibenförmig ausgebildet ist.
